# EUROPÄISCHE PATENTSCHRIFT

(11) **EP 2 888 945 B1**
(45) Veröffentlichungstag und Bekanntmachung des Hinweises auf die Patenterteilung: **31.10.2018**
(21) Anmeldenummer: 13199571.4
(22) Anmeldetag: 24.12.2013
(51) Int. Cl.: A23C 21/04, A23L 29/231, A23L 29/256, A23L 29/262, A23L 27/60, A23L 23/00, A23L 35/00, A23C 21/06, A23C 21/08

(54) **Auf Sauermolke basierende Zusammensetzungen und deren Verwendungen**
Compositions based on acidic whey and its uses
Compositions a base de petit-lait acidulé et ses utilisations

(43) Veröffentlichungstag der Anmeldung: 01.07.2015
(73) Patentinhaber: DMK Deutsches Milchkontor GmbH, 27404 Zeven (DE)
(72) Erfinder: Borcherding, Katja, 27404 Zeven (DE); Hoch, Matthias, 27404 Zeven (DE)
(74) Vertreter: Fabry, Bernd

(56) Entgegenhaltungen:
- EP-A1- 0 653 166
- DE-A1- 3 326 347
- JP-A- S62 111 632
- RU-A- 95 111 355
- US-A- 4 293 573
- TRUE L C ET AL: "Utilization of Acid Whey As A Base For Salad Dressings", CULTURED DAIRY PRODUCTS JOURNAL, AMERICAN CULTURED DAIRY PRODUCTS INSTITUTE, US, Bd. 7, Nr. 3, 1. Januar 1972 (1972-01-01), Seiten 14-15, XP009177565, ISSN: 0045-9259
- DATABASE FSTA [Online] INTERNATIONAL FOOD INFORMATION SERVICE (IFIS), FRANkFURT-MAIN, DE; SPIEGEL L S: "Salad dressing boys overlook Miss M's favorite dish.", XP002723258, Database accession no. FS-1978-11-T-0422 & FOOD PRODUCT DEVELOPMENT, Bd. 12, Nr. 1, 1978, Seite 40, 42, FOOD PRODUCT DEVELOPMENT 1978 ANDOVER, MASSACHUSETTS, USA
- DATABASE FSTA [Online] INTERNATIONAL FOOD INFORMATION SERVICE (IFIS), FRANkFURT-MAIN, DE; SILVA K ET AL: "Ice-cream sensory evaluation formulated with product of acid bovine milk serum.", XP002723259, Database accession no. FS-2006-08-Pn1975 & SILVA K ET AL.: "Ice-cream sensory evaluation formulated with product of acid bovine milk serum", CIENCIA E TECNOLOGIA DE ALIMENTOS, Bd. 26, Nr. 1, 2006, Seite 116,
- DATABASE FSTA [Online] INTERNATIONAL FOOD INFORMATION SERVICE (IFIS), FRANkFURT-MAIN, DE; LIAO S Y: "Development of models to predict whey protein functionality.", XP002723260, Database accession no. FS-1986-11-P-0034 & DISSERTATION ABSTRACTS INTERNATIONAL, B, Bd. 46, Nr. 6, 1985, DISSERTATION ABSTRACTS INTERNATIONAL, B 1985 OHIO STATE UNIV., 190 N. OVAL DRIVE, COLUMBUS, OHI
- DATABASE WPI Week 199715 Thomson Scientific, London, GB; AN 1997-163418 & RU 2 064 768 C1 (DEPITEKH RES ENTERP) 10 August 1996 (1996-08-10)

## Beschreibung

### GEBIET DER ERFINDUNG

Die Erfindung befindet sich auf dem Gebiet Milchprodukte und betrifft auf Sauermolke basierende Zusammensetzungen und das Verfahren zur Herstellung der daraus resultierenden Endprodukte.

### STAND DER TECHNIK

Sauermolke oder auch nur Molke (auch Käsewasser, Sirte oder Schotte) genannt, ist die wässrige grünlich-gelbe Restflüssigkeit, die bei der Herstellung von Milchprodukten weltweit in einer Menge von ca. 82 Millionen Tonnen pro Jahr anfällt. Sie besteht zu 94% aus Wasser, zu 4 bis 5% aus Milchzucker und ist nahezu fettfrei. Es gibt zwei Sorten Molke: die Süßmolke (auch Labmolke), die entsteht, wenn man Milch mit Lab zur Käseherstellung dicklegt. Sauermolke entsteht, wenn man die Milch mit Milchsäurebakterien behandelt. Nachdem das Eiweiß als Käse oder Quark abgetrennt ist, verbleibt die Molke und stellt in der Regel ein Abfallprodukt dar. Molke enthält neben Milchsäure, noch Vitamine B1, B2 und B6 sowie Kalium, Calcium, Phosphor und andere Mineralstoffe, doch vor allem bis 1% Molkenprotein. Nach Abtrennung der hochwertigen Molkenproteine durch Ultrafiltration verbleibt ein Reststoff, der durch seinen hohen CSB-Gehalt (CSB: chemischer Sauerstoffbedarf) nur unter hohem Kosteneinsatz zu entsorgen ist. Die Hauptkomponente ist neben den anorganischen Salzen der Milchzucker (Lactose), der aufgrund seiner schwachen Süßkraft in der Lebensmittelindustrie nur geringe Bedeutung hat. Lactose kann aber mit Hilfe von Milchsäurebakterien zu Milchsäure (Lactat) umgesetzt werden, die als Konservierungs- und Säuerungsmittel in der Lebensmittelherstellung Verwendung findet und als Grundstoff in der chemischen Industrie - zum Beispiel in der Produktion von Polylactiden, biologisch abbaubaren Kunststoffen - eingesetzt werden kann.

Im Gegensatz zu Sauermolke kann Süßmolke zur Herstellung von Molkenkäse verwendet werden. Hierbei wird die Süßmolke erhitzt, und die flockige Masse, die sich nach dem Erhitzen absetzt, ist der Ausgangsstoff für die Erzeugung von Molkenkäse. Oftmals wird die Süßmolke noch angesäuert- Bekannte Käsesorten, die aus Süßmolke hergestellt wird, sind beispielsweise Ricotta, Ziger oder der norwegische Braunkäse. Ansonsten wird Molke in verschiedenen Erfrischungsgetränken zugesetzt.

Im deutschen Sprachgebrauch wird unter Dressing, Salatsaucen verstanden, die im klassischen Sinne häufig aus Essig und Öl bestehen. Darüber hinaus gibt es auch Salatsaucen auf Basis von Milchprodukten und Mayonnaise. Diese sind von Natur aus cremiger, weil die Grundprodukte bereits eine Emulsion darstellen. Salatsaucen auf Joghurtbasis haben einen mildsäuerlichen Grundgeschmack, sind etwas dickflüssiger und bieten sich daher auch als Dip an. Ebenfalls verwendet wird, süße Sahne für einen samtigen, und saure Sahne oder Buttermilch für einen säuerlichen Geschmack sowie Creme fraîche für eine sämigere Emulsion.

Dressing oder Mayonnaise, kann eine Öl- in Wasser oder Wasser-in-Öl Emulsion darstellen. Die industrielle Herstellung von Mayonnaise erfolgt fast ausnahmslos unter Einsatz hochtouriger Homogenisiermaschinen, sogenannter Kombinatoren. Vor allem finden Zahnkranzdispergiermaschinen und Kolloidmühlen Verwendung, die nach dem Rotor-Stator-Prinzip arbeiten. Die Rohemulsion wird durch das Rotor-Stator-System der Maschine gepumpt, wobei durch Druck bzw. heftige Strömungen Scherkräfte entstehen, deren Stärke die Festigkeit der Öltropfen übertreffen, sodass diese in feinste Teilchen zerrissen und gleichmäßig in der Emulsion verteilt werden. Dabei wird Eigelb mit Gewürzstoffen (Salz, Pfeffer und etwas Flüssigkeit (Wasser, Zitronensaft, Essig)) verrührt. Unter starkem Rühren wird Öl zugegeben. Zu Beginn des Emulgierens ist es wichtig, dass das Öl nur tropfenweise zugegeben wird, um ein "Umkippen" (Brechen) der Emulsion zu verhindern. Bei einer umgekippten Emulsion wäre nicht mehr die wässrige Phase, sondern die Ölphase die kontinuierliche Phase der Emulsion. Ein solches Gemenge zeigt Eigenschaften einer Essig-Öl-Salatsauce und kann nicht zu einer für Mayonnaise typischen, pastösen Masse geschlagen werden. Später kann das Öl auch in einem dünnen Strahl zugegeben werden, da das System dann wesentlich unempfindlicher reagiert und nicht mehr zum Umkippen neigt. Um die Salmonellengefahr auszuschließen, kann man mit pasteurisiertem oder hart gekochtem Eigelb arbeiten. Die emulgierenden Eigenschaften des Lecithins sind auch im erstarrten Eigelb noch voll wirksam. Oder das Eigelb wird durch Milch ersetzt. Dann wirken die Milchproteine als Emulgator.

Saucen (bzw. Soßen) hingegen basieren grundsätzlich auf aromatischen Flüssigkeiten wie Fonds, Weinen, Ölen oder Milchprodukten, die durch verschiedene Verfahren gebunden bzw. angedickt werden. Hierfür benutzt man typischerweise Mehl (Mehlschwitze), Stärke, Ei und / oder kalte Butter. Durch die veränderte Konsistenz werden die anderen Speisebestandteile verbunden und Inhaltsstoffe direkt mit ihnen kombiniert. Saucen bestimmen zumeist maßgeblich durch die Zusammenstellung der enthaltenen Zutaten und Konzentration der Aromen den Charakter und Geschmack eines Gerichts.

Zumeist ist also die Grundbasis von Dressings, Mayonnaisen, Saucen und/oder essbaren Emulsionen eine Milchbasis. So wird in EP 2055199 B1 ein Dressing offenbart, auf Basis einer Fettphase, welche konjugierte Linolensäuren oder Derivate daraus umfassen. In EP 0653166 A1 wird eine Sauce offenbart worin die wässrige Phase aus Käse-Sauermolke bestehen kann. In RU2064768 wird eine Mayonnaise offenbart die auf Basis von Molke hergestellt wird.

In EP 0689773 B1 wird eine Mayonnaise bzw. Dressingzusammensetzung offenbart, welche ebenfalls auf Milch basiert. Vorzugsweise Buttermilch oder Magermilch.

Die Aufgabe der vorliegenden Erfindung bestand nun darin, neue Kombinationen einer Zusammensetzung zu finden, welche eine Basis für Dressings, Mayonnaisen, Saucen und/oder essbaren Emulsionen bilden. Vor allem war es Aufgabe der vorliegenden Erfindung eine kostengünstige Basis für Dressings, Mayonnaisen, Saucen und/oder essbaren Emulsionen bereitzustellen. Gleichzeitig sollte die erfindungsgemäße Basiszusammensetzung größtmögliche Stabilität aufweisen und eine Grundrezeptur für breite Anwendungsgebiete darstellen. Eine weitere Aufgabe war es, einen möglichen Ersatz zur Reduzierung des Eigelbanteils in den Basisrezepturen bereitzustellen, um einen ernährungsphysiologischen Vorteil zu erzielen, wobei gleichzeitig die Stabilität der Zusammensetzung nicht darunter leiden sollte.

### BESCHREIBUNG DER ERFINDUNG

Ein erster Gegenstand der Erfindung betrifft eine auf Sauermolke basierende Zusammensetzung, bestehend aus
(a) mindestens 70 Gew.-% Sauermolke,
(b) mindestens 0.4 Gew.-% Milcherzeugnisse, ausgewählt aus der Gruppe bestehend aus Joghurt, Dickmilch, Creme fraiche, saure Sahne, Schmand, Kefir (Kefir mild),
(c) 0.05 bis 2 Gew.-% Stabilisator, dadurch gekennzeichnet, dass das der Stabilisator ausgewählt ist aus Cellulosederivate, insbesondere CMC (E466), Propylglycolalginate (E405), Sojabohnen-Polyose (E426) und / oder Pektine (E 440),
(d) 0.5 bis 9 Gew.-% Zucker und / oder Zuckeraustauschstoffe und / oder Süßstoffe,
(e) 0.5 bis 2 Gew.-% Eigelb.

In einer bevorzugten Ausführungsform besteht die erfindungsgemäße auf Sauermolke basierende Zusammensetzung aus
(a) mindestens 90 Gew.-% Sauermolke,
(b) mindestens 0.4 Gew.-% Milcherzeugnisse, ausgewählt aus der Gruppe bestehend aus Joghurt, Dickmilch, Creme fraiche, saure Sahne, Schmand, Kefir (Kefir mild),
(c) 0.1 bis 1.2 Gew.-% Stabilisator, dadurch gekennzeichnet, dass das der Stabilisator ausgewählt ist aus Cellulosederivate, insbesondere CMC (E466), Propylglycolalginate (E405), Sojabohnen-Polyose (E426) und / oder Pektine (E 440),
(d) 0.7 bis 5 Gew.-% Zucker und / oder Zuckeraustauschstoffe und / oder Süßstoffe,
(e) 0.8 bis 1.5 Gew.-% Eigelb.

Es wurde nun überraschenderweise gefunden, dass Sauermolke eine effiziente Komponente in solchen Zusammensetzungen ist, insbesondere in Dressings, Mayonnaisen, Saucen und/oder essbaren Emulsionen und / oder essbare Schäume. Sauermolke weist nicht nur einen ernährungsphysiologisch hohen Wert auf, sondern es hat sich weiterhin herausgestellt, dass Sauermolke wegen seines hohen Wasseranteils als Ersatz für Wasser während der Herstellung fungiert, und somit im Produktionsschritt gespart werden kann. Zudem hat sich überraschenderweise gezeigt, dass der Proteinanteil in der Sauermolke zur Stabilität des Endproduktes beiträgt, so dass der Eigelbanteil reduziert werden kann.

In einer bevorzugten Ausführungsform ist das Milcherzeugnis ausgewählt aus der Gruppe bestehend aus Joghurt, saure Sahne, Creme fraiche und / oder Schmand. Die Milcherzeugnisse werden vorzugsweise aus Mager-, Rahm- oder Milch mit standardisiertem Fettgehalt hergestellt. Besonders bevorzugt wird Joghurt eingesetzt, das aus Joghurtmilch stammt und, welche ausgewählt ist aus Mager-, Rahm- oder im Fettgehalt standardisierte Milch und der Joghurt ein stichfester oder gerührter Joghurt ist, und vorzugsweise ein Fettgehalt von 0.1 bis 4.1 Gew. % aufweist, bevorzugt ist es Magermilch mit ca. 0.1 Gew.-% Fettgehalt oder Standardmilch mit 3.8 bis 4.1 Gew.-% Fettgehalt.

Bevorzugt werden in der Sauermolke basierende Zusammensetzung, Pektine eingesetzt, welche ausgewählt sind aus der Gruppe bestehend aus Apfelpektine und/ oder Citruspektine. Besonders bevorzugt ist hierbei beispielsweise Pektin Classic CM 201 von Herbstreith & Fox oder Pektin der Firma C.E. Roeper GmbH oder der Firma W. Behrens GmbH & Co. KG oder der Firma Birkamidon Rohstoffhandels GmbH oder der Firma Tate & Lyle.

In einer bevorzugten Ausführungsform stammt das Eigelb in der Sauermolke basierende Zusammensetzung aus Gesamteigelb, Eigelbpulver, enzymatisch behandeltes Eigelbpulver oder separierte Eigelbfraktionen, wie beispielsweise Plasma- und/ oder Granulafraktionen. Vorzugsweise ist das Eigelb Eigelbpulver, beispielsweise Hühnereigelbpulver hitzestabil, sprühgetrocknet, pasteurisiert von Sanova Foods A/S oder Hühnereigelbpulver Emultherm KSMS-Mix von Ovobest Eiprodukte GmbH & Co. KG. Auch bevorzugt sind die Eigelbfraktionen, Granula- und Plasmafraktionen, wobei die Plasmafraktion besonders bevorzugt wird.

Eigelbfraktionen, die Granula- und Plasmafraktionen sind, können sowohl im Laborals auch im Produktionsmaßstab, mittels zentrifugaler Trennung von Eigelb gewonnen werden. Dabei liegt der Fokus auf den produktspezifischen (pH-Wert, lonenstärke, Calciumgehalt) sowie prozessseitigen Einflussgrößen (g-Zahl, Verweilzeit, Temperatur). Die in der zentrifugalen Trennung gewonnen Granula- und Plasmafraktionen werden in einem nachfolgenden Prozessschritt sprühgetrocknet. Hierbei erfolgt zumeist eine spezifische Funktionalisierung der Reinfraktionen durch eine enzymatische Modifikation sowie eine Anpassung der Milieubedingungen. Die getrennte enzymatische Modifikation der reinen Granula- und Plasma-Fraktionen erlaubt ein seperates Einstellen der Milieubedingungen (lonenstärke, pH-Wert), so dass eine gezielte Steigerung des enzymatischen Effekts möglich ist. Die getrennt gewonnen und separat PLA2 modifizierten und milieuangepassten Granula- und Plasma-Fraktionen werden dann zumeist separat getrocknet. Dabei können die thermischen Bedingungen (Lufteintritts- und Luftaustrittstemperatur, Verweilzeit) im Trockner für beide Fraktionen in unterschiedlicher Weise eingestellt werden und daraus resultierend die Funktionalität der Fraktionen als strukturgebende Komponenten in weiten Bereichen variiert werden. Die Eigelb-fraktionierung wird im FEI (Forschungskreis der Ernährungsindustrie e.V. (FEI), Bonn) AiF 15512N beschrieben und ist dem Fachmann bestens bekannt, so dass es zur Durchführung keine weiteren Erläuterungen bedarf, da sie dem allgemeinen Fachwissen zuzurechnen sind.

Als geeignete Stabilisatoren werden vorzugsweise Substanzen eingesetzt, die in Sauermilchprodukten insbesondere Proteine stabilisieren. Vorzugsweise sind diese Proteinstabilisatoren ausgewählt aus Cellulosederivate, insbesondere CMC (E466), Propylglycolalginate (E405), Sojabohnen-Polyose (E426), Pektine (E 440).

In einer bevorzugten Ausführungsform umfasst eine solche Sauermolke-basierende Zubereitung Pektin als Stabilisator, vorzugsweise Apfelpektin und / oder Citruspektin, vorzugsweise in einem Bereich 0.05 Gew.-% bis 2 Gew.-%, ganz besonders bevorzugt von 0.1 Gew.-% bis 1.2 Gew.-%.

Ein weiterer Gegenstand der Erfindung ist die Verwendung der erfindungsgemäßen Sauermolke basierte Zusammensetzung als Basis für Dressings, Cremes, Saucen und/ oder essbare Emulsionen und/oder essbare Schäume.

Unter Dressings werden in der vorliegenden Erfindung Salatsaucen auf Basis von Milchproduktenverstanden, vorzugsweise auf Joghurtbasis. Ebenfalls verwendet wird süße Sahne für einen samtigen und zarten Geschmack. Und saure Sahne oder Buttermilch für einen säuerlichen Geschmack sowie Creme fraiche für eine sämigere Emulsion. Ein Dressing kann eine Öl- in Wasser oder Wasser-in-Öl Emulsion darstellen.

Unter Soßen (oder Saucen) werden in vorliegenden Erfindung Soßen verstanden, die vorzugsweise eine O/W oder W/O-Emulsion bilden, und zumeist auf Basis von Milchprodukten, die gebunden oder eingedickt werden mit Mehl, Stärke, Ei oder Butter. Vorzugsweise sind solche Soßen ausgewählt aus: Sauce Bechamel (Milchrahmsauce), Sauce Hollandaise, Sauce Mayonnaise, Sauce Bernaise, Rouille und Grüne Sauce. Vorzugsweise ist eine sauce Mayonnaise dabei ausgewählt aus: Mayonnaise, Aioli, Cocktailsauce, Sauce Gloucester, Sauce Remoulade, Sauce Tartare und Grüne Sauce.

Unter Cremes werden in der vorliegenden Erfindung beispielsweise Salatcremes verstanden, welche eine Ableitung der Mayonnaise ist, und vorzugsweise weniger Fett enthält als die Mayonnaise.

Unter essbare Emulsionen werden in der vorliegenden Erfindung O/W- und W/O-Emulsionen verstanden, die aus der erfindungsgemäße Sauermolke basierte Zusammensetzung herstellbar sind, und welche ebenfalls in Form einer Creme oder Sauce vorliegen kann.

Vorzugsweise können die genannten Dressings, Cremes, Saucen und/ oder essbare Emulsionen und/oder essbare Schäume, welche auf der Basis der erfindungsgemäßen Sauermolke-Zusammensetzungen hergestellt werden, auch als kalte Sauce, Dipp oder Brotaufstrich oder für Fleisch oder Fisch verwendet werden.

Unter dem Wort "Basis" für Dressings, Cremes, Saucen und/ oder essbare Emulsionen und/ oder essbare Schäume wird in der vorliegenden Erfindung verstanden, dass die Sauermolke-Zusammensetzung eine Lebensmittelgrundzusammensetzung darstellt, aus der mit geringem Aufwand, das verkaufsfertige Endprodukt entsteht. Dies bedeutet, dass beispielsweise durch die Zugabe von lediglich wenigen weiteren Zusätzen (Inhaltsstoffen) zu der Sauermolke basierte Zusammensetzung, bereits ein Endprodukt erhalten wird, mit dem vom Verbraucher oder Kunden gewünschten Geschmack oder organoleptischen Vorstellungen. Eine solche Grundrezeptur vereinfacht den Herstellungsprozess für Dressings, Cremes, Saucen und/ oder essbare Emulsionen und/oder essbare Schäume und bietet Einsparpotential im Bereich der Produktion und eine schnelle Verarbeitung.

Besonders bevorzugt ist hierbei die Verwendung der erfindungsgemäßen Sauermolke basierte Zusammensetzung als Basis für Salatdressings/-cremes, Feinkostdressings/-cremes, Mayonnaise, Tzaziki und/oder Dip-Soßen. Besonders bevorzugt wird die Sauermolkebasiszusammensetzung für Salatdressings/-cremes, Feinkostdressings/-cremes und/oder Mayonnaise eingesetzt.

Des Weiteren besteht ein Gegenstand der vorliegenden Erfindung darin, dass durch die Verwendung der erfindungsgemäßen Sauermolke basierten Zusammensetzung, die eingesetzte Sauermolke den Wasseranteil in Dressings, Cremes, Soßen und/ oder essbare Emulsionen und/oder essbare Schäume bereits ersetzt, so dass kein zusätzliches Wasser bei der Herstellung des Endproduktes hinzugefügt werden muss.

Der Ersatz des Wasseranteils durch Sauermolke erfolgt durch den Wassergehalt, der bereits in der Sauermolke enthalten ist, so dass dadurch die Zugabe von Wasser und somit ein Schritt im Produktionsverfahren eingespart werden kann. Die für die Herstellung der Dressings, Cremes, Soßen und/ oder essbare Emulsionen und/ oder essbare Schäume benötigten Wasseranteils wird vorzugsweise 1:1 durch den Wasseranteil in der Sauermolke bereits ersetzt.

Die Verwendung von Sauermolke als Hauptkomponente und Basis für Dressings, Cremes, Soßen und/ oder essbare Emulsionen und/oder essbare Schäume, insbesondere in der erfindungsgemäße Sauermolke basierten Zusammensetzung, weist vorzugsweise einen hohen ernährungsphysiologischen Nutzen bzw. Wert auf.

Ernährungsphysiologische Nutzen und Wert einer erfindungsgemäßen Sauermolke basierte Zusammensetzungen resultiert beispielsweise aus dem geringen Fett- und Kaloriengehalt der Sauermolke. Zudem wirkt die Molke positiv auf den Verdauungstrakt. Der Milchzucker in der Molke, gelangt teilweise in den Dickdarm und kann von Milchsäurebakterien zu Milchsäure abgebaut werden. Das Wachstum dieser gesundheitsfördernden Darmbakterien und ein ausgeglichenes Milieu im Darmtrakt werden gefördert. Die Molkenproteine sind sehr gut verdaulich. Sie enthalten reichlich essenzielle Aminosäuren in einem ausgewogenen Verhältnis, so dass die biologische Wertigkeit sehr gut ist. Immunglobuline, Laktoferrin und andere Substanzen des Molkeneiweißes wirken bioaktiv, beispielsweise fördern sie die Abwehrkräfte des Körpers oder begünstigen die Resorption von Nährstoffen.

Weiterhin ist ein Gegenstand der vorliegenden Erfindung die Verwendung der erfindungsgemäßen Sauermolke basierende Zusammensetzung als Emulgatorsystem in Dressings, Cremes, Soße und/ oder essbare Emulsionen und/ oder essbare Schäume.

Ferner betrifft die Erfindung ebenfalls ein Verfahren zur Herstellung eines Dressings, einer Creme, einer Sauce und/ oder einer essbaren Emulsion und/oder essbare Schäume, dadurch gekennzeichnet, dass eine erfindungsgemäße Sauermolke basierende Zusammensetzung als Basis für die Gesamtzusammensetzung bereitgestellt wird.

Bei der Herstellung von Dressings, Cremes, Soßen und/ oder essbare Emulsionen und/oder essbare Schäume wird in einem ersten Schritt Joghurt hergestellt, welches vorzugsweise Magermilchjoghurt oder Standardmilchjoghurt ist. In einem nächsten Schritt wird der Joghurt mit Sauermolke vermischt und so die erfindungsgemäße Sauermolkebasis erhalten. Zuletzt wird die Sauermolke-Basiszusammensetzung zum Endprodukt (Dressings, Cremes, Soßen und/ oder essbare Emulsionen und/oder essbare Schäume) verarbeitet.

Die bei der Herstellung der Sauermolke basierende Zubereitung oder des Endproduktes verwendete Milch kann von Kühen, aber auch von anderen Milch gebenden Tieren, wie beispielsweise Schafe, Ziegen, Pferde und Kamele gewonnen werden.

### HERSTELLUNG VON MAGERMILCH

Zur Herstellung der Magermilch für die Sauermolke basierende Zusammensetzung, findet zunächst eine Abtrennung von festen Nichtmilchbestandteilen sowie die Entrahmung des Fettanteils von etwa 4 Gew.-% aus der Rohmilch statt. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.
¹(http://www.westfalia-separator.com/de/anwendungen/molkereitechnik/milch-molke.html).

Die Wärmebehandlung der Milch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Milch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### HERSTELLUNG VON MILCHERZEUGNISSEN

### Joghurt

Joghurt besteht vereinfacht aus Milch, Milchsäure und auch Bakterien. Die Milch kann von Kühen, aber auch von anderen Milch gebenden Tieren, wie beispielsweise Schafe, Ziegen, Pferde und Kamele gewonnen werden.

Bevorzugt wird Standardmilch oder Magermilch (wie oben beschrieben) zur weiteren Her-stellung des Joghurts verwendet werden. Der Milch werden Bakterienkulturen zugesetzt. Die Bakterienkulturen bauen den Milchzucker Laktose zu Milchsäure ab, wodurch das Milchei-weiß gerinnt. Diese sogenannte Fermentation führt nicht nur zur mehr oder weniger festen Konsistenz sowie dem Joghurt-typischen Geruch und Geschmack, sondern auch zu einer deutlich längeren Haltbarkeit. Bei der modernen Herstellung kommt im Unterschied zu frü-her stets wärmebehandelte Milch mit eingestelltem Fettgehalt zum Einsatz. Indem die Her-steller außerdem die Art und Zusammensetzung der eingesetzten Milchsäurekulturen nicht einfach dem Zufall überlassen, nehmen sie schon im Vorfeld gezielt Einfluss auf die Struktur und das Aroma. Vorzugsweise werden thermophile Bakterienkulturen eingesetzt, die eine Temperatur von ca. 38 bis 42 Grad bevorzugen und welche überwiegend ausgewählt sind aus Spezies Streptococcus thermophilus und Lacotobacillus (delbrueckii subsp. bulgaricus), Bifidobacterium bifidum für milde Joghurtsorten mit einem geringeren Milchsäuregehalt. Ebenfalls im Hinblick auf gute Konsistenz werden sehr oft noch Magermilchpulver zugesetzt oder durch Eindampfen den Wassergehalt d er Ausgangsmilch reduziert. Die generell erforderliche Erhitzung der Milch dient ebenfalls nicht nur dem Schutz vor schädlichen Mikroorganismen, sondern gleichfalls dem Aufbau der Joghurtgels.

Es kann zwischen stichfesten oder gerührten Joghurt unterschieden werden. Für gerührten oder sämigen Joghurt wird die Milch nach Zugabe der Joghurtkulturen mehrere Stunden in großen Stahltanks fermentiert. Am besten arbeiten thermophile Bakterien im Temperaturbereich von 38 bis 42 °C. Durch die sich bildende Milchsäure gerinnen die Caseine (bestimmte Fraktionen des Milcheiweißes) langsam zu einem gallertartigen Netzwerk, in das die flüssige Molke eingeschlossen ist. Sobald ein bestimmter pH-Wert (Säurewert) erreicht ist, wird der Joghurt glattgerührt, auf Kühlschranktemperatur abgekühlt, abgefüllt und sofort verschlossen. Da die Viskosität nach dem Verpacken zunimmt, kann das verkaufsfertige Produkt ähnlich wie stichfester Joghurt aussehen. Diese zweite Variante wird jedoch so hergestellt, dass die Milch-Kulturenmischung gleich in Joghurtbecher abgefüllt wird, d.h. der Fermentationsprozess findet noch vor der Kühlung statt. Während die Mischung im Becher gerinnt, darf wieder keine Bewegung die Gallertbildung stören. Auch bei stichfestem Joghurt stoppt dann nach Erreichen des gewünschten pH-Wertes ein rasches Abkühlen die Fermentation. Zum Schluss kommen die Becher in eine Kältekammer, wo der Joghurt dann endgültig fest wird.

### Dickmilch

Dickmilch, Sauermilch, Setzmilch oder Stockmilch ist ein aus Kuhmilch gewonnenes Milchprodukt. Es entsteht heute vor allem aus pasteurisierter - früher aus ungekochter - und homogenisierter Kuhmilch durch bakterielle Milchsäurebildung aus dem Milchzucker. Die Folge ist das Ausflocken des Caseins, was die Milch dann "dick" macht. Im Unterschied zu Joghurt (thermophile Kulturen, Temperaturoptimum 42-45 °C) werden bei der Herstellung von Dickmilch mesophile (Temperaturoptimum 22-28 °C) Kulturen beigefügt.

### Crème fraiche

Creme fraîche wird aus Sahne hergestellt, der Milchsäurebakterien zugesetzt werden. Die Milchsäurebakterien setzen dabei vorzugsweise bei einer Temperatur von 20 bis 40 °C den Milchzucker in Milchsäure um. Dadurch erhält die Creme fraîche ihren besonderen Geschmack und ihre Konsistenz. Vorzugsweise weist Creme fraîche einen Fettgehalt von ca. 30% auf.

### Saure Sahne

Saure Sahne oder Sauerrahm (creme aigre, auch creme acidulée) ist Sahne, die mit Milchsäurebakterien versetzt wurde, wodurch sie neben einem leicht säuerlichen Geschmack eine festere, cremige Konsistenz annimmt. Gehandelt wird saure Sahne in verschiedenen Varianten unter diesen Namen:
- Saure Sahne, Sauerrahm enthält mindestens 10 % Fett.
- Creme legere ist eine fettärmere Variante der Creme fraîche mit einem Fettgehalt von meist um die 20 %.
- Schmand ist eine fetthaltigere saure Sahne mit einem Fettgehalt von meist 20-29 %. Ein Zusatz von Bindemitteln (meist Stärke) ist erlaubt.
- Creme fraîche (creme fraîche epaisse) enthält mindestens 30 % Fett, ein Zusatz von bis zu 15 % Saccharose ist erlaubt. Creme fraîche darf nach der Fermentation nicht mehr wärmebehandelt werden.

### Schmand

Schmand wird durch Fermentation von Sahne nach Zugabe verschiedener mesophiler Milchsäurebakterien (*Lactococcus lactis, Lactococcus lactis subsp. cremoris, Ln. cremoris und Lc. diacethylactis*) -Kulturen hergestellt. Die Bakterien erzeugen dabei Milchsäure, die wiederum die Sahne sauer macht und gleichzeitig verdickt. Schmand enthält vorzugsweise 20 - 29% Fett.

**Kefir (Kefir mild)**

Industriell hergestellter und im Handel angebotener Kefir entspricht üblicherweise *nicht* dem traditionell mit Kefirknollen hergestellten Getränk und hat die Bezeichnung "Kefir, mild". Damit das entstehende Getränk immer den gleichen Geschmack besitzt, wird industriell mit einer definierten Mischung verschiedener Bakterien und Hefen gearbeitet, die die komplexe Zusammensetzung des Mikroorganismen-Konsortiums von Kefirkörnern nicht vollständig nachahmen können.

### HERSTELLUNG DER SAUERMOLKEBASIS

Das hergestellte Milcherzeugnis (Joghurt, saure Sahne, Sauerrahm, Creme Fraiche, Schmand, Kefir, Dickmilch) wird mit Sauermolke verrührt. Vorzugsweise ist das Milcherzeugnis Joghurt und stammt vorzugsweise aus Magermilch oder standardisierte Milch. Zu diesem Gemisch werden nun die weiteren Inhaltsstoffe, wie vorzugsweise Pektin, Zucker und Eigelb (-pulver/-fraktion) zugesetzt. Anschließend wird erhitzt, wobei die Temperatur vorzugsweise bei 80 bis 150°C liegt, besonders bevorzugt bei 85 bis 100°C, und ganz besonders bei 90 bis 95 °C (±3°C) liegt. Im Folgenden wird die Masse unter Druck homogenisiert, wobei die Temperatur vorzugsweise gehalten wird und der Druck von 100 bis 350 bar liegt, vorzugsweise von 200 bis 300 bar und besonders bevorzugt von 250 bis 280 bar. Anschließend wird auf 4 °C abgekühlt.

Die so erhaltene Sauermolkebasis stellt ein Halbfertigprodukt dar, das in wenigen Schritten zum Endprodukt formuliert werden kann. Beispielsweise können der Sauermolkebasis weitere Aromastoffe hinzugefügt werden, um eine bestimmte Geschmacksrichtung zu erreichen oder Prebiotische Zusätze, um den Gehalt an ernährungsphysiologischen Stoffen weiter zu erhöhen.

Im Weiteren werden die zusätzlichen Inhaltsstoffe, die sowohl während der Herstellung der Sauermolkebasis hinzugefügt werden können, als auch zur Vervollständigung des Endpro-duktes (Dressing, Creme, Soße und/ oder essbare Emulsion und/oder essbare Schäume) dem Halbfertigprodukt hinzugefügt werden kann.

### Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### GEWERBLICHE ANWENDBARKEIT

Die Verarbeitung von Eigelb in die Sauermolkebasis ist hier ebenfalls Gegenstand der Erfindung. Sauermolkebasis als Halbfertigware (bzw. -produkte) mit Eigelb weist nicht nur den hohen ernährungsphysiologischen Wert auf, die durch die Sauermolke bewirkt wird, sondern weist auch eine exzellente Stabilität und Textur auf.

Für die Hersteller ist die Sauermolkebasis daher vorteilhaft, da sie stabil ist und bereits als Halbfertigware (bzw. -produkt) bereits eine breite Abdeckung aufzeigt, um viele Endprodukte daraus herstellen zu können.

### BEISPIELE

### Herstellung der Sauermolke basierten Zusammensetzung mit anschließender Verarbeitung zum Dressing

### a) Herstellung von Magermilchjoghurt

Magermilch (99,90%) mit einem Fettanteil von 0.1% wird angewärmt (55°C), homogenisiert, thermisiert (95 °C, Heißhaltung 3 Minuten) und auf 40 °C abgekühlt. Anschließend mit thermophilen Bakterienkulturen Streptococcus thermophilus und Lacotobacillus *(delbrueckii subsp. bulgaricus)* versetzt und bei ca. 40 °C fermentiert. Sobald ein bestimmter pH-Wert (Säurewert) erreicht ist, wird der Joghurt glattgerührt, auf Kühlschranktemperatur (< 8°C) abgekühlt, abgefüllt und sofort verschlossen.

### b) Herstellung der Sauermolkebasis

Der hergestellte Joghurt, wird mit Sauermolke verrührt. Zu diesem Gemisch werden nun Pektin, Zucker und Eigelb zugesetzt. Anschließend wird auf 90 bis 92°C erhitzt. Im Folgenden wird die Masse bei 250 bar homogenisiert und anschließend wird abgekühlt.

### c) Dressingherstellung

Sauermolke-Basiszusammensetzung aus b) und ggf. WPC werden in einer Emulgiermaschine (IKA Master Plant) bei 6000 U/min emulgiert. Es werden Öl und Stabilisatoren zugegeben und nach 60s Öl und Salz und Essig hinzugefügt. Die Sauermolkezusammensetzung mit dem Zusatz von Öl, Stabilisatoren, Salz und Essig wird für 600 s bei 6000 U/min emulgiert. Anschließend wird die emulgierte Zusammensetzung unter Rühren bei 75°C für 600 s thermisiert. Es wird dann abgefüllt und innerhalb von max. 60 Minuten auf Kühlhaustemperatur (< 8°C) gekühlt.

### Beispiel 1

### Sauermolke basierende Zusammensetzungen

Es wurden Sauermolke basierende Zusammensetzungen gemäß der obigen Herstellung a) bis b) hergestellt. Die Stabilität und der organoleptische Eindruck der hergestellten Sauermolke basierenden Zusammensetzungen wurden anschließend bewertet.

Die Bewertung der Stabilität wurde visuell vorgenommen, wobei darauf geachtet wurde, dass die Konsistenz der hergestellten Zusammensetzungen (mit geringer Abweichung) mit dem Standard übereinstimmen.

**Tabelle 2**

| Sauermolke basierte Zusammensetzungen (Mengenangaben als Gew.-%) | | | | | |
|---|---|---|---|---|---|
| **Mischung** | **Sauermolke** | **Joghurt** | **Pektin** | **Zucker** | **Eigelb** |
| A | 67 | 33 | 0.42 | - | - |
| B | 67 | 33 | 0.42 | 5.43 | - |
| c | 67 | 33 | 0.8 | 5.43 | - |
| D | 67 | 33 | 1.1 | 5.43 | - |
| E | 67 | 33 | 1.1 | 5.43 | 0.84 |
| F | 67 | 33 | 1.0 | 5.43 | - |

**Tabelle 3**

| Bewertung der Sauermolke basierende Zusammensetzungen | | |
|---|---|---|
| **Mischung** | **Stabilität** | **organoleptische Bewertung** |
| A | stabil | nicht ausreichend |
| B | weniger stabil | nicht ausreichend |
| C | einigermaßen stabil | gut |
| D | stabil | gut |
| E | stabil | ausreichend |
| F | stabil | gut |

Die Mischung E wurde weiterhin im Dressing (Herstellung gemäß c) getestet. Dabei zeigt sich ein gutes Emulgierverhalten. Allerdings benötigt das Dressing weitere Aromastoffe, um die Geschmacksnote zu verbessern.

Mischung F wurde ebenfalls im Dressing (Herstellung gemäß c) getestet. Das Dressing zeigte ebenfalls gutes Emlugierverhalten bei gleichzeitiger guter Geschmacksnote.

### Beispiel 2

### Emulgierverhalten von Sauermolke basierende Zusammensetzungen

Es wurden Sauermolke basierende Zusammensetzungen gemäß der obigen Herstellung a) bis b) hergestellt und die Stabilität nach der Partikelverteilung im Dressing beurteilt.

**Tabelle 4**

| Sauermolke basierte Zusammensetzungen (Mengenangaben als Gew.-%) | | | | | |
|---|---|---|---|---|---|
| **Mischung** | **Sauermolke** | **Joghurt** | **Pektin** | **Zucker** | **Eigelb** |
| G | 50 | 50 | 1.0 | 5.43 | |
| H | 50 | 50 | 1.0 | 5.43 | 0.84 |
| I | 67 | 33 | 1.0 | 5.43 | |
| J | 67 | 33 | 1.0 | 5.43 | 0.84 |
| K | 80 | 20 | 1.0 | 5.43 | |
| L | 80 | 20 | 1.0 | 5.43 | 0.84 |
| M | 100 | - | 1.0 | 5.43 | |
| N | 100 | - | 1.0 | 5.43 | 0.84 |

Die Sauermolke basierenden Zusammensetzungen G bis N weisen alle eine gute glatte Struktur auf und sind stabil.

Im Folgenden wurden die Sauermolke basierenden Zusammensetzungen G bis N zum Dressing mit der Basisrezeptur aus Tabelle 1 (gemäß Herstellung c)) verarbeitet. Die Stabilität der Dressings wurde mittels Partikelverteilungsmessungen (HELOS Partikelanalyse mit Laserbeugung, Sympatec GmbH) bestimmt. Hierbei wurde die Partikelverteilung wie folgt bestimmt: Die unverdünnte Probe wurde mittels des Laserbeugungssensor HELOS analysiert (Sympatec GmbH)

Die Stabilität wurde über die Partikelverteilung bestimmt, wobei eine Partikelverteilung von x(50%) (Mitte) ausgewertet und wie folgt bewertet wurde: Ein Wert:
unter 10 = sehr gut,
unter 20 = gut,
unter 30 = ausreichend,
ab 30 = nicht ausreichend (instabil)

Bei der Warmlagerung zeigen sich höhere Werte, was darauf hindeutet, dass die Struktur instabiler wird.

**Tabelle 5**

| Partikelverteilung von Sauermolke basierende Zusammensetzungen in Dressings | | |
|---|---|---|
| **Dressing** | **Kaltlagerung** | **Warmlagerung** |
| | **x (50 %) µm** | **x (50 %) µm** |
| Standard (Beispiel 1) | 15.0 | 14.5 |
| G' | 23.5 | 24.4 |
| H' | 7.0 | 6.6 |
| I' | 29.0 | 26.2 |
| J' | 6.6 | 7.0 |
| K' | 23.1 | 24.0 |
| L' | 6.1 | 6.2 |
| M' | 20.5 | 18.0 |
| N' | 5.7 | 5.7 |

Unabhängig von den unterschiedlichen Mischungsverhältnissen Sauermolke/ Joghurt wird die Emulsionsbildung durch Zugabe von Eigelb deutlich verbessert. Auch wenn kein Eigelb zusätzlich eingesetzt wird, kann mit den unterschiedlichen Mischungsverhältnissen Sauer-molke/Joghurt ein stabiles Dressing hergestellt werden. Die Partikelverteilung der eifreien und eihaltigen Dressings unterscheiden sich jedoch vom Standarddressing, dahingehend, dass die eihaltigen eine geringere und engere Partikelverteilung aufweisen, und die eifreien dagegen im Wert höher liegen, d.h. eine höhere Spannweite aufweisen

Die Dressings wiesen eine ausreichende Stabilität von bis zu 4 Wochen auf.

Die organoleptische Bewertungen liegen für die Dressings G' bis N' im Guten bis akzeptablen Rahmen. Mit weiteren Zusätzen könnten sie stets geschmacklich verfeinert werden und so eingestellt werden, wie es dem Verbraucher schmeckt.

### Beispiel 3

### Stabilität von Dressings mit und ohne Eigelb

Es wurde die Sauermolkebasis J aus Beispiel 2 verwendet und zum Dressing gemäß Herstellung c) verarbeitet, wobei das Eigelb variiert wurde und als Vergleich auch einmal weggelassen wurde.

**Tabelle 6**

| Sauermolke basierende Zusammensetzungen in Dressings mit und ohne Eigelb | | | | |
|---|---|---|---|---|
| **Nr.** | **Dressing** | **Eigelb** | **Stabilität** | **Textur** |
| 1 | I' | - | Ausreichend | Glatt und homogen |
| 2 | J' | Eigelbpulver* | Sehr gut | Glatt und homogen |
| 3 | J' | Eigelbplasma** | Sehr gut | Glatt und homogen |
| 4 | J' | Eigelbgranula** | Nicht ausreichend | Glatt, jedoch Phasentrennung |

| | | | | |
|---|---|---|---|---|
| *der Firma Sanovo **aus Eigelbfraktionierung gemäß FEI AiF 15512N | | | | |

Die Stabilität wurde über die Partikelverteilung bestimmt, wobei eine Partikelverteilung von x (50%) µm (Mitte) ausgewertet und wie folgt bewertet wurde:

**Tabelle 7**

| Partikelverteilung von Sauermolke basierende Zusammensetzungen in Dressings mit und ohne Eigelb | | |
|---|---|---|
| **Dressing Nr.** | **Kaltlagerung** | **Warmlagerung** |
| | x (50 %) µm | x (50 %) µm |
| 1 | 17.7 | 28.5 |
| 2 | 8.2 | 8.5 |
| 3 | 4.8 | 4.9 |
| 4 | 23.7 | 26.0 |

Ein Wert:
unter 10 = sehr gut
unter 20 = gut
unter 30 = ausreichend
ab 30 = nicht ausreichend (instabil)

Bei der Warmlagerung zeigen sich höhere Werte, was darauf hindeutet, dass die Struktur instabiler wird.

### Beispiel 4

### Stabilität von Dressings mit Milchpulver (Zugabe bei der Herstellung des Halbfabrikats)

Die Sauermolkebasis I und M wurden zusätzlich mit Buttermilchpulver gemäß der obigen Herstellung a) und b) hergestellt (O) und zum Dressing gemäß Herstellung c) verarbeitet. Diese wurde mit der Buttermilchfreien Mischung verglichen.

**Tabelle 8**

| Partikelverteilung auf Sauermolke basierende Zusammensetzung in Dressings mit Buttermilchpulver | | |
|---|---|---|
| **Dressing** | **Kaltlagerung** | **Warmlagerung** |
| | x (50 %) µm | x (50 %) µm |
| I' (ohne Buttermilchpulver) | 29.0 | 26.2 |
| O' (mit Buttermilchpulver) | 10.9 | 11.0 |
| M' (ohne Buttermilchpulver) | 21.1 | 21.8 |
| O' (mit Buttermilchpulver) | 13.5 | 9.6 |

Ein Wert:
unter 10 = sehr gut
unter 20 = gut
unter 30 = ausreichend
ab 30 = nicht ausreichend (instabil)

Die Zugabe von Buttermilchpulver bewirkt eine Verringerung der Partikelverteilung. Dies zeigt sich sowohl beim Joghurt/Sauermolke-Gemisch als auch bei dem Einsatz von 100% Sauermolke.

## Patentansprüche

1. Auf Sauermolke basierende Zusammensetzung, bestehend aus
(a) mindestens 70 Gew.-% Sauermolke,
(b) mindestens 0.4 Gew.-% Milcherzeugnisse, ausgewählt aus der Gruppe bestehend aus Joghurt, Dickmilch, Crème fraîche, saure Sahne, Schmand, Kefir (Kefir mild),
(c) 0.05 bis 2.0 Gew.-% Stabilisator, **dadurch gekennzeichnet, dass** das der Stabilisator ausgewählt ist aus Cellulosederivate, insbesondere CMC (E466), Propylglycolalginate (E405), Sojabohnen-Polyose (E426) und / oder Pektine (E 440),
(d) 0.5 bis 9 Gew.-% Zucker und/oder Zuckeraustauschstoffe und/oder Süßstoffe,
(e) 0.5 bis 2.0 Gew.-% Eigelb.

2. Zusammensetzung nach Anspruch 1, **dadurch gekennzeichnet, dass** das Milcherzeugnis b) Joghurt ist, das aus Joghurtmilch stammt und, welche ausgewählt ist aus Mager-, Rahm- und im Fettgehalt standardisierte Milch und der Joghurt ein stichfester oder gerührter Joghurt ist.

3. Zusammensetzung nach Anspruch 2, **dadurch gekennzeichnet, dass** der Fettgehalt in der Joghurtmilch von 0.1 bis 40 Gew. % liegt.

4. Zusammensetzung nach einem der Ansprüche 1 bis 3, **dadurch gekennzeichnet, dass** der Joghurt aus Joghurtmilch Magermilch ist und der Fettgehalt bei 0.1 Gew.-% liegt.

5. Zusammensetzung nach einem der Ansprüche 1 bis 4, **dadurch gekennzeichnet, dass** Eigelb ausgewählt ist aus der Gruppe bestehend aus Gesamteigelb, Eigelbpulver, enzymatisch behandeltes Eigelbpulver, separierte Eigelbfraktionen aus Plasma- und/oder Granulafraktionen.

6. Verwendung einer Zusammensetzung nach den Ansprüchen 1 bis 5 als Basis für Dressings, Cremes, Saucen und/ oder essbare Emulsionen und/oder essbare Schäume.

7. Verwendung nach Anspruch 6, wobei die Dressings, Cremes, Soßen und/ oder essbare Emulsionen und/oder essbare Schäume ausgewählt sind aus der Gruppe bestehend aus Salatdressings/-cremes, Feinkostdressings/-cremes, Mayonnaise, Tzaziki und/oder Dip-Soßen.

8. Verfahren zur Herstellung eines Dressings, einer Creme, einer Sauce und/ oder einer essbaren Emulsion und/oder essbare Schäume, **dadurch gekennzeichnet, dass** eine Sauermolke basierende Zusammensetzung nach einen der Ansprüche 1 bis 5 als Basis für die Gesamtzusammensetzung bereitgestellt wird.

9. Verwendung einer Sauermolke basierende Zusammensetzung nach einer der Ansprüche 1 bis 5 als Ersatz von Wasser in Dressing, Creme, Soße und/oder essbare Emulsion und/oder essbare Schäume.

10. Verwendung nach Anspruch 9 für einen ernährungsphysiologischen Nutzen.

11. Verwendung einer Sauermolke basierende Zusammensetzung nach einer der Ansprüche 1 bis 5 als Emulgatorsystem in Dressing, Creme, Soße und/oder essbare Emulsion und/oder essbare Schäume.

## Claims

1. An acid whey composition consisting of
(a) at least 70 wt. % acid whey,
(b) at least 0.4 wt. % milk products, selected from the group consisting of yoghurt, fermented milk, creme fraîche, sour cream, cultured cream, kefir (kefir mild),
(c) 0.05 to 2.0 wt. % stabilizer, wherein the stabilizer is selected from cellulose derivatives, in particular CMC (E466), propylglycol alginates (E405), soybean polyose (E426) and/or pectins (E440),
(d) 0.5 to 9 wt. % sugar and/or sugar substitutes and/or sweeteners,
(e) 0.5 to 2.0 wt. % egg yolk.

2. The composition according to claim 1, wherein the milk product b) is yoghurt that is derived from yoghurt milk and, which is selected from skimmed, full-cream and fat content-standardized milk and the yoghurt is a compact or stirred yoghurt.

3. The composition according to claim 2, wherein the fat content in the yoghurt milk is from 0.1 to 40 wt. %.

4. The composition according to one of claims 1 to 3, wherein the yoghurt from yoghurt milk is skimmed milk and the fat content is 0.1 wt. %.

5. The composition according to one of claims 1 to 4, wherein the egg yolk is selected from the group consisting of whole egg yolk, egg yolk powder, enzyme-treated egg yolk powder, separated egg yolk fractions of plasma and/or granules fractions.

6. Use of the composition according to one of claims 1 to 5 as a base for dressings, creams, sauces and/or edible emulsions and/or edible foams.

7. Use according to claim 6 wherein the dressings, creams, sauces and/or edible emulsions and/or edible foams are selected from the group consisting of salad dressings/-creams, delicatessens/-creams, mayonnaise, tzatziki and/or Dip sauces.

8. A method for producing a dressing, a cream, a sauce and/or an edible emulsion and/or edible foams, wherein the composition according to one of claims 1 to 5 is provided as a basis for the overall composition.

9. Use of an acid whey composition according to one of claims 1 to 5 as a substitute for water in dressings, creams, sauces and/or edible emulsions and/or edible foams.

10. Use according to claim 9 for a nutrition-physiological benefit.

11. Use of an acid whey composition according to one of claims 1 to 5 as an emulsifier system in dressings, creams, sauces and/or edible emulsions and/or edible foams.

## Revendications

1. Composition à base de lactosérum acide, constituée par :
(a) au moins 70 % en poids de lactosérum acide,
(b) au moins 0,4 % en poids de produits laitiers, choisis dans le groupe constitué par le yaourt, le lait caillé, la crème fraîche, la crème acidulée, la crème aigre, le kéfir (kéfir doux),
(c) 0,05 à 2,0 % en poids de stabilisateur, **caractérisée en ce que** le stabilisateur est choisi parmi les dérivés de cellulose, notamment la CMC (E466), l'alginate de propylène glycol (E405), l'hémicellulose de soja (E426) et/ou la pectine (E440),
(d) 0,5 à 9 % en poids de sucre et/ou de produits de remplacement de sucre et/ou d'édulcorants,
(e) 0,5 à 2,0 % en poids de jaune d'oeuf.

2. Composition selon la revendication 1, **caractérisée en ce que** le produit laitier b) est le yaourt, qui provient de lait de yaourt, qui est choisi parmi le lait écrémé, le lait entier et le lait à teneur en matières grasses normalisée, et le yaourt est un yaourt ferme ou brassé.

3. Composition selon la revendication 2, **caractérisée en ce que** la teneur en matières grasses du lait de yaourt est de 0,1 à 40 % en poids.

4. Composition selon l'une quelconque des revendications 1 à 3, **caractérisée en ce que** le yaourt est à base de lait écrémé de yaourt et la teneur en matières grasses est de 0,1 % en poids.

5. Composition selon l'une quelconque des revendications 1 à 4, **caractérisée en ce que** le jaune d'oeuf est choisi dans le groupe constitué par le jaune d'oeuf entier, la poudre de jaune d'oeuf, la poudre de jaune d'oeuf traitée enzymatiquement, les fractions de jaune d'oeuf séparées constituées par des fractions plasma et/ou granulaires.

6. Utilisation d'une composition selon l'une quelconque des revendications 1 à 5 en tant que base pour des sauces, des crèmes, des jus et/ou des émulsions comestibles et/ou des mousses comestibles.

7. Utilisation selon la revendication 6, dans laquelle les sauces, les crèmes, les jus et/ou les émulsions comestibles et/ou les mousses comestibles sont choisis dans le groupe constitué par les sauces/crèmes pour salades, les sauces/crèmes d'épicerie fine, la mayonnaise, le tzatziki et/ou les sauces à tremper.

8. Procédé de fabrication d'une sauce, d'une crème, d'un jus et/ou d'une émulsion comestible et/ou d'une mousse comestible, **caractérisé en ce qu'**une composition à base de lactosérum acide selon l'une quelconque des revendications 1 à 5 est préparée en tant que base pour la composition totale.

9. Utilisation d'une composition à base de lactosérum acide selon l'une quelconque des revendications 1 à 5 en tant que substitut d'eau dans une sauce, une crème, un jus et/ou une émulsion comestible et/ou une mousse comestible.

10. Utilisation selon la revendication 9 pour un bénéfice nutritionnel.

11. Utilisation d'une composition à base de lactosérum acide selon l'une quelconque des revendications 1 à 5 en tant que système émulsifiant dans une sauce, une crème, un jus et/ou une émulsion comestible et/ou une mousse comestible.
